# EUROPEAN PATENT SPECIFICATION

(11) **EP 2 979 973 B1**
(45) Date of publication and mention of the grant of the patent: **08.05.2019**
(21) Application number: 13880388.7
(22) Date of filing: 27.03.2013
(51) Int. Cl.: B63H 23/36, F16J 15/32, F16J 15/3244, B63H 23/32, F16J 15/324

(54) **STERN PIPE SEAL DEVICE**
STERNROHRDICHTUNGSVORRICHTUNG
DISPOSITIF DE JOINT D'ÉCUBIER D'EMBOSSAGE

(43) Date of publication of application: 03.02.2016
(73) Proprietor: Mitsubishi Shipbuilding Co., Ltd., Yokohama-shi Kanagawa 220-8401 (JP); Wartsila Japan Ltd., Hyogo 650-0045 (JP)
(72) Inventor: NISHIOKA, Tadasuke, Tokyo 108-8215 (JP); YANO, Akihiko, Tokyo 108-8215 (JP); SANO, Takeshi, Tokyo 108-8215 (JP); HIMENO, Nobuhiro, Toyama-shi Toyama 930-0916 (JP); KYOGOKU, Mashiba, Toyama-shi Toyama 930-0916 (JP)
(74) Representative: Henkel, Breuer & Partner
(86) International application number: PCT/JP2013/059097
(87) International publication number: WO 2014/155582

(56) References cited:
- WO-A1-2008/099648
- DE-A1- 2 643 769
- DE-C- 884 262
- GB-A- 2 093 538
- JP-A- 2000 238 694
- JP-B2- H 026 384
- JP-B2- 2 909 948
- JP-Y1- S4 740 477
- JP-Y2- H 055 341
- US-A1- 2011 068 542

## Description

### TECHNICAL FIELD

The present invention relates to a stern tube sealing device using a sealing ring, disposed between a housing and a propeller shaft for a ship penetrating the housing disposed on an outboard side of a stern tube, for preventing seawater from entering the ship.

### BACKGROUND

A sealing ring formed of rubber or elastomer is conventionally used for a stern tube sealing device.

For instance, as illustrated in FIG. 7, JP 2000-238694 A discloses a stern tube sealing device 010 including sealing rings 04, 05, 06 of a lip shape including elastic members which are in sliding contact with a liner 03 mounted to a propeller shaft 02 penetrating through a stern tube 01. The sealing rings 04, 05, 06 are disposed so as to be interposed between a plurality of housing members 07. The first sealing ring 04 disposed on the stern side and the second sealing ring 05 adjacent to the first sealing ring 04 together form the first stern annular space 08, while the second sealing ring 05 and the third sealing ring 06 together form the second stern annular space 09. In this way, ingress of sea water, entry of foreign matters, and leakage of lubricant oil inside a ship are prevented.

GB 2093538 A discloses a stern tube sealing device with a plurality of sealing rings surrounding an outer circumferential surface of a liner of a propeller shaft. Two sealing rings disposed closest to the stern define together an inner annular chamber but the lubrication and cooling of the sliding-contact section of the first sealing ring disposed closest to the stern is achieved by a flow of lubricating liquid between this inner annular chamber and an outer annular chamber through inlet and outlet channels. Thereby, the lubricating liquid is cooled before it is immediately returned to the inner annular chamber. A first pipe and a second pipe leading to the outer annular chambers are provided for exchanging the lubricating liquid after a certain period of use when the quality of the liquid has deteriorated.

JPS4740477Y discloses a similar stern tube sealing device, whereby cooling lubricant is injected through a nozzle in vicinity of the sliding contact section of a sealing ring.

### SUMMARY

### Problems to be Solved

The cross section of the first sealing ring 04 disclosed in JP 2000-238694 A is a technique to generate a sending function actively when the propeller shaft 02 rotates by providing fine unevenness on a sliding-contact surface at which the sealing ring 104 contacts the liner 03, so as to send sea water in the first stern annular space 08 forcedly to the outside of the ship where the pressure is higher when the propeller shaft 02 rotates.

However, it is known that friction heat generated by rotation of the propeller shaft 02 reaches 150 °C or more at a part of the sliding-contact section at which the sealing ring 04 contacts the liner 03, in accordance with an increase in the size and speed of a ship (from "Study on sealing ring material for stern tube sealing device, the first report").

Thus, as a material of the sealing ring, nitrile butadiene rubber (NBR), fluorine-containing rubber, or the like, which has great thermal resistance, is used.

Still, however, cracks are often produced due to thermal hardening in a case of a NBR sealing ring. Thus, fluorine-containing rubber, which is made from expensive materials, is used recently.

Even under such circumstances, abrasion progresses at the sliding-contact section between the sealing ring and the liner, which makes it necessary to replace the sealing ring on regular basis.

To replace the sealing ring, costly operation of a ship is halted and a large-sized member (e.g. a propeller or a propeller shaft) is detached and attached, for instance, which leads to a decrease in the availability of the ship and to a large amount of replacement cost.

The present invention was made in view of the above issues, and has an object to provide a stern tube sealing device whereby abrasion is prevented to improve durability of a sealing ring by cooling and lubricating a sliding-contact section between the first sealing ring and a liner.

### Solution to Problems

To achieve the above object, the present invention provides a stern tube sealing device including the features of claim 1. The stern tube sealing device has a plurality of sealing rings surrounding and contacting an outer circumferential surface of a liner of a propeller shaft which rotatably supports a propeller mounted to a stern of a ship. The stern tube sealing device further includes: a housing fitted onto the liner, the housing holding the plurality of sealing rings; a first sealing ring disposed closest to the stern among the plurality of sealing rings; a second sealing ring disposed on a ship front side of the first sealing ring at a distance from the first sealing ring; and a nozzle configured to inject lubricant oil for cooling the first sealing ring.

An injection opening of the nozzle for injecting the lubricant oil is disposed in a vicinity of a sliding-contact section at which the first sealing ring slidably contacts the liner.

According to the above invention, the friction heat of the first sealing ring generated from the sliding motion at the circumferential contact section between the first sealing ring and the liner is effectively cooled by the lubricant oil injected from the injection opening.

In this way, it is possible to restrict abrasion and hardening of the first sealing ring at the circumferential-contact section, which improves the durability of the first sealing ring and extends the replacement period of the first sealing ring, which makes it possible to reduce the running cost of the ship.

Further, in the present invention, a spiral groove is disposed on a surface of the housing which faces the liner and in a vicinity of the injection opening, in such a direction that the lubricant oil is forced out toward the stern annular space in accordance with normal rotation of the liner.

According to the present invention, the lubricant oil is forced out toward the stern annular space by providing the spiral groove for forcing the lubricant oil out toward the stern annular space so that the lubricant oil for cooling the circumferential contact section between the first sealing ring and the liner is easily injected from the injection opening, which makes it possible to improve the cooling effect.

Further, preferably in the present invention, the nozzle may be formed on the housing.

According to the above invention, with the housing including the nozzle, it is possible to inject the lubricant oil to the circumferential contact section between the first sealing ring and the liner precisely, which makes it possible to improve the cooling effect.

Further, preferably in the present invention, the nozzle may be disposed inside the first sealing ring.

According to the above invention, the lubricant oil injected from the injection opening passes through the inside of the first sealing ring, which makes it possible to cool the cumulative heat inside the first sealing ring, and thus the effect to cool the first sealing ring is further improved.

Further, preferably in the present invention, the nozzle may include: the introduction inlet which has an opening in a lubricant oil channel inside the housing; and a tubular member disposed in a clearance section across which the housing faces the liner, the tubular member forming a lubricant oil channel communicating with the injection opening.

According to the above invention, since the tubular nozzle is disposed in the clearance section between the housing and the liner, it is possible to reduce the cost with the simplified structure for arrangement of the nozzle, and it is possible to inject the lubricant oil to the sliding-contact section of the first sealing ring precisely thanks to the improved production accuracy accompanying the simplification of the structure, which makes it possible to cool the sliding-contact section efficiently.

Further, preferably in the present invention, the stern tube sealing device may further include: a space section formed by the propeller shaft and the liner fitted onto the propeller shaft; a first return oil channel disposed between the first sealing ring and the injection opening so as to communicate with the space section in a radial direction of the liner; a second return oil channel disposed on a portion of the liner which faces the stern annular space so as to bring the space section and the stern annular space into communication in the radial direction of the liner.

The lubricant oil having cooled the sliding-contact section may return to the stern annular space via the space section.

According to the above invention, the lubricant oil having cooled the sliding-contact section returns to the stern annular space via the space section between the liner and the propeller shaft, which makes it possible to prevent the pressure of the lubricant oil between the injection opening and the sliding-contact section from becoming too high to make it easier to secure the amount of injection of the lubricant oil from the nozzle injection opening, as well as to cool the heat inside the liner (heat generated by the sliding-contact section) with the lubricant oil passing through the first return oil channel.

Further, preferably in the present invention, the introduction inlet for the lubricant oil to be injected from the injection opening may have an opening oriented orthogonally to a flow direction of the lubricant oil in the lubricant oil channel inside the housing.

According to the above invention, since the opening is oriented orthogonally to a flow direction of the lubricant oil in the lubricant oil channel inside the housing, the lubricant oil enters the nozzle more easily.

As a result, a large amount of lubricant oil is injected from the injection opening, which improves the efficiency in cooling the first sealing ring.

### Advantageous Effects

According to the above invention, it is possible to provide a stern tube sealing device whereby durability of a sealing ring is improved by cooling intensively a sliding-contact section at which the first sealing ring contacts a liner with lubricant oil injected from a nozzle.

### BRIEF DESCRIPTION OF DRAWINGS

FIG. 1 is a schematic cross-sectional view of a stern tube sealing device for implementing the present invention.
FIG. 2 is a partial enlarged cross-sectional view of the first embodiment of the present invention.
FIG. 3A is a development view of a thread disposed on a surface of a housing that is facing a liner, taken from FIG. 2 in a circumferential direction. FIG. 3B is a partial enlarged view of FIG. 3A. FIG. 3C is a development view of another shape.
FIG. 4 is a partial enlarged cross-sectional view of the second embodiment of the present invention.
FIG. 5 is a partial enlarged cross-sectional view of the third embodiment of the present invention.
FIG. 6 is a partial enlarged cross-sectional view of the fourth embodiment of the present invention.

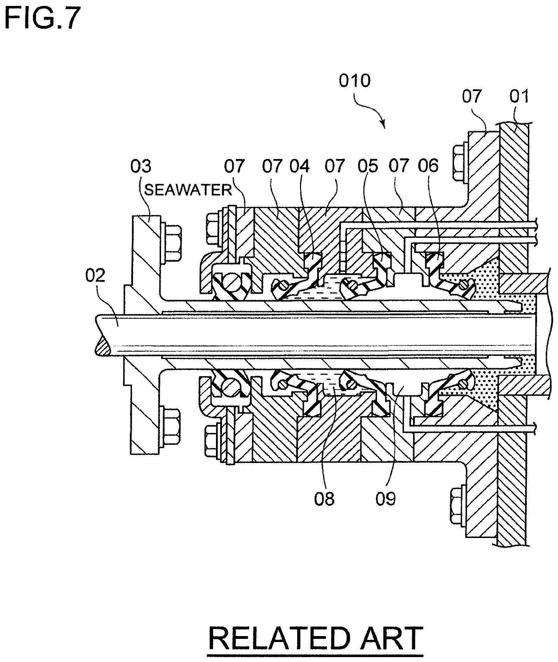

FIG. 7 is an explanatory diagram of a conventional technique.

### DETAILED DESCRIPTION

Embodiments of the present invention will now be described in detail with reference to the accompanying drawings.

### (First embodiment)

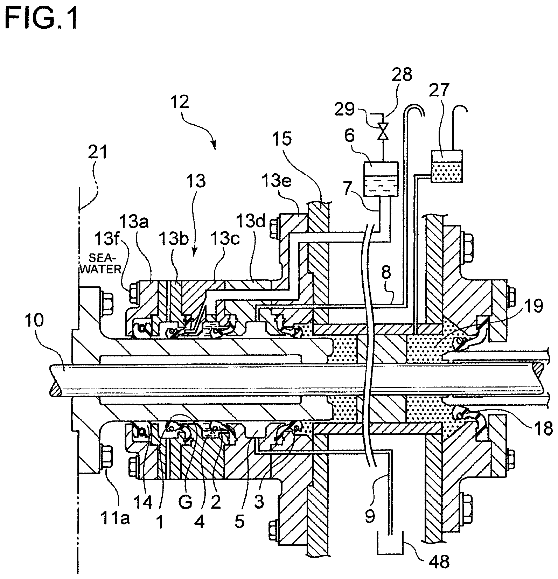

With reference to FIG. 1, the overall configuration of a stern tube sealing device 12 will be described.

As illustrated in FIG. 1, the stern tube sealing device 12 includes a propeller shaft 10 for driving a ship, a propeller 21 mounted to an end portion of the propeller shaft 10, a housing 13 disposed so as to protrude toward an outboard side (stern side) from a stern tube 15, the housing 13 being penetrated by the propeller shaft 10, and sealing rings 1, 2, 3 that seal a gap between the inner circumferential surface of the housing 13 and the outer circumferential side of a liner 11 fitted onto the propeller shaft 10 from outside.

The liner 11 of the propeller shaft 10 is fixed to the propeller 21 by bolts 11a.

The torso portion of the liner 11 encompasses the outer circumference of the propeller shaft 10 and rotates integrally with the propeller shaft 10.

The first sealing ring 1, the second sealing ring 2, and the third sealing ring 3 each having a lip shape are in sliding contact with the outer circumference of the torso portion of the liner 11, arranged in this order from the stern side.

Further, a fishnet protection ring 14 is mounted on a side of the first sealing ring 1 that is closer to the stern. The fishnet protection ring 14 prevents a foreign matter under the sea such as a fishnet from entering the stern tube sealing device 12.

The housing 13 includes a plurality of housings 13a to 13e stacked in a layered fashion in the axial direction of the propeller shaft 10 and fixed integrally to the stern tube 15 by bolts 13f.

As to the plurality of housings 13a to 13e, the first housing 13a, the second housing 13b, the third housing 13c, the fourth housing 13d, and the fifth housing 13e are arranged in this order from the stern side.

The first, second, third sealing rings are respectively fixed in a state of being interposed between the housings 13a to 13e.

The lips of the first sealing ring 1 and the second sealing ring 2 are oriented toward the seawater side, while the third sealing ring 3 is oriented toward the bow side.

The above sealing rings 1, 2, 3 and 18 are formed of an elastic member such as rubber and elastomer. A rubber material is formed from fluorine rubber or NBR having high water resistance, oil resistance, and thermal resistance.

Further, each sealing ring has an annular shape, and a ring section has a constant cross-sectional shape, the torso portion of the liner 11 being inserted into a hollow section at the center.

Further, the first sealing ring 1 and the second sealing ring 2 together form the first stern annular space 4, which is a stern annular space. The second sealing ring 2 and the third sealing ring 3 together form the second stern annular space 5.

Inside the stern tube 15 between the third sealing ring 3 and the fourth sealing ring 18, a stern tube chamber 19 communicating with an oil-reservoir tank 27 is formed.

Lubricant oil is continuously supplied to the first stern annular space 4 via an oil feed pipe 7 connected to the oil-reservoir tank 6 for storing the lubricant oil disposed in the ship.

The oil-reservoir tank 6 is adjusted so that the hydraulic pressure of the first stern annular space 4 becomes lower than an axial-core draft water pressure.

The oil-reservoir tank 6 includes a replenishment line 28 for resupplying lubricant oil when the lubricant oil in the oil-reservoir tank 6 decreases, and a valve 29 for adjusting the replenishment of the lubricant oil.

A vent line 8 communicating with the atmospheric air and a drain line 9 are connected to the second stern annular space 5. The drain line 9 recovers lubricant oil upon occurrence of leakage of lubricant oil for stern-tube bearings (lubricant oil in the first stern annular space 4 and the stern tube chamber 19). The reference numeral 48 indicates a drain tank.

As the second stern annular space 5 is in communication with the atmosphere, it is possible to set the pressure of the stern tube chamber to be lower than the axial-core draft water pressure independently. Thus, it is possible to lower the pressure in the stern tube chamber 19, so that the load of the fourth sealing ring 18 is reduced. In this way, it is possible to improve the durability of the fourth sealing ring 18.

The lubricant oil flows through the oil feed pipe 7 in the stern tube 15 and respective oil channels formed through the fifth, fourth, and third housings 13e, 13d, 13c, so as to be supplied into the first stern annular space 4 at the third housing 13c.

As described above, the lubricant oil flowing through the oil feed pipe 7 and the respective oil channels is adjusted so that a pressure lower than the axial-core draft water pressure is applied.

This is to reduce the load on the first sealing ring 1 during rotation of the propeller shaft 10.

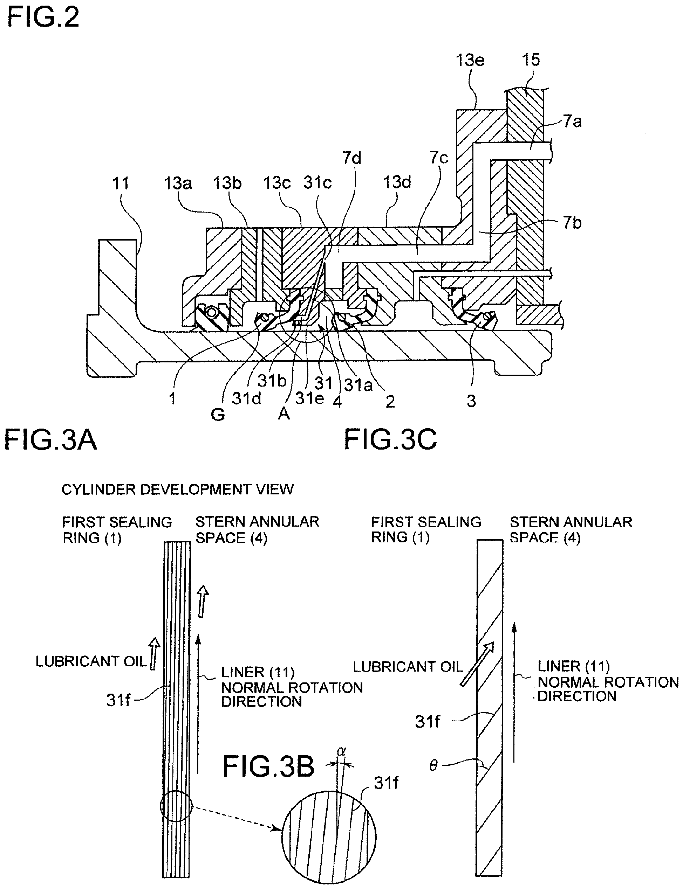

FIG. 2 illustrates a partial enlarged view of the housing 13 according to the present embodiment.

The respective oil channels include the first oil channel 7a formed through a wall portion of the stern tube 15 and connected with the oil feed pipe 7, the second oil channel 7b having an opening at a position on the fifth housing 13e that faces the first oil channel 7a, the third oil channel 7c having an opening at a position on the fourth housing 13d that faces the second oil channel 7b, and the fourth oil channel 7d having an opening at a position on the third housing 13c that faces the third oil channel 7c.

Furthermore, the third housing 13c includes a nozzle 31 that includes an introduction inlet 31c with an opening communicating to the fourth oil channel 7d for introducing lubricant oil, a radial oil channel 31a extending toward the center in the radial direction continuously from the introduction inlet 31c, an injection opening 31d for lubricant oil disposed continuously from the radial oil channel 31a and in the vicinity of a sliding-contact section G at which the first sealing ring 1 is in sliding contact with the liner 11, and an axial oil channel 31b that bends toward the first sealing ring 1.

With the radial oil channel 31a and the axial oil channel 31b, a function as a nozzle which injects lubricant oil to the sliding-contact section G at which the first sealing ring 1 slidably contacts the liner 11 is achieved.

The introduction inlet 31c has an opening in a direction orthogonal to the flow of the lubricant oil flowing linearly from the third oil channel 7c to the fourth oil channel 7d.

Accordingly, the introduction inlet 31c is disposed so that the fluid pressure of the lubricant oil is applied to the introduction inlet 31c and a large amount of lubricant oil enters the nozzle 31 easily.

The nozzle 31 is disposed on each of a plurality of locations in an annular fashion along the outer circumferential surface of the liner 11.

Further, FIG. 3A is a development view of the inner circumferential surface 31e of the section A in FIG. 2 (a surface of the housing 13 that is facing the liner 11), taken in the circumferential direction.

A spiral groove 31f is formed on an inner circumferential surface 31e of the housing 13 which is in the vicinity of the injection openings 31d for the lubricant oil and which is facing the liner 11. The spiral groove 31f has a pump function to force the lubricant oil out toward the first stern annular space 4 via a clearance section R between the housing 13 and the liner 11.

The spiral groove 31f is formed in such a direction that the lubricant oil rotates along with rotation of the liner so as to be forced out toward the first stern annular space 4 when the liner 11 rotates in the normal direction (rotation in a direction in which the ship moves forward).

Accordingly, the lubricant oil flows in the direction of the hollow arrows illustrated in FIG. 3A along the spiral groove 31f.

There is a pumping function on the inner circumferential surface 31e of the housing 13 in a direction in which the lubricant oil is forced out toward the first stern annular space 4.

In this way, the lubricant oil for cooling the sliding-contact section G between the first sealing ring 1 and the liner 11 is injected from the injection openings 31d more easily, which makes it possible to improve the effect to cool the sliding-contact section G with a larger amount of lubricant oil.

In the present embodiment, the spiral groove 31f is a single spiral groove and has a structure with a pumping function that is slightly restricted.

In the present embodiment, as illustrated in FIG. 3B, which is a partial enlarged view of FIG. 3A, the helix angle (lead angle) α of the spiral groove 31f is curbed to 1 to 10 degrees.

The helix angel α is curbed to 1 to 10 degrees in order to restrict the amount of injection of lubricant oil from the injection opening 31d.

If an unnecessary amount of lubricant oil is injected from the injection opening 31d, the load of a pump for pressure-feeding the lubricant oil increases, which leads to a loss in the output and fuel consumption of an internal combustion engine.

Further, the pumping function is restricted in order to prevent a decrease in the pressure of the lubricant oil at the sliding-contact section G.

Here, in a case where a large amount of lubricant oil is injected from the injection opening 31d, the helix angle (lead angle) θ of the spiral groove 31f may be increased as needed to improve the pumping efficiency, as illustrated in FIG. 3C.

The lubricant oil in the oil-reservoir tank 6 flows through the oil feed pipe 7 and each oil channel to be injected to the sliding-contact section G of the first sealing ring 1 contacting the liner 11 from the injection opening 31d of the nozzle 31.

The lubricant oil having cooled the sliding-contact section G at which the first sealing ring 1 contacts the liner 11 circulates within the first stern annular space 4 and passes through oil channels and a lubricant-oil cooling device, which are not illustrated, to be returned to the oil-reservoir tank 6.

With the above configuration, the friction heat of the first sealing ring 1 generated from the sliding motion of the first sealing ring 1 on the liner 11 is effectively cooled by the lubricant oil injected from the injection opening.

In this way, it is possible to restrict abrasion and hardening of the first sealing ring 1 at the sliding-contact section, which improves the durability of the first sealing ring 1 and extends the replacement period of the first sealing ring 1, which makes it possible to restrict the running cost of the ship.

Further, the third housing 13c has a shape such that a section of the third housing 13c adjacent to the first stern annular space 4 bulges in the axial direction and the radial direction in order to dispose the nozzle 31 on the third housing 31c.

As a result, a section without the nozzle 31 has a function as a backup ring in case of pressure application from the seawater side to the first sealing ring 1, which makes it possible to improve the functional effect of the section as a sealing ring.

Further, since the nozzle 31 for injecting the lubricant oil is disposed on the third housing 13c, the lubricant oil is precisely injected to the sliding-contact section G of the first sealing ring 1 contacting the liner 11, which makes it possible to improve the efficiency in cooling the first sealing ring 1.

### (Second embodiment)

The present embodiment is similar to the first embodiment except for the arrangement structure of the nozzles. Thus, only a nozzle forming part will be described.

Further, the same component is indicated by the same reference numeral and not described in detail.

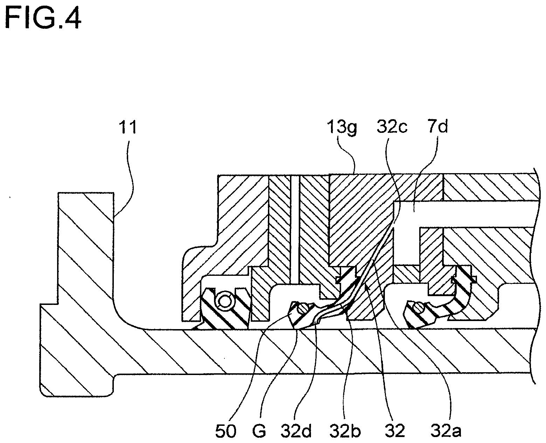

As illustrated in FIG. 4, in the present embodiment, the first sealing ring 50 is fixed by the second housing 13b and the third housing 13g.

The first nozzle 32a is disposed on the third housing 13g. The first nozzle 32a includes an introduction inlet 32c which has an opening communicating with the fourth oil channel 7d for introducing lubricant oil, and forms a lubricant-oil channel formed to reach the section of the first sealing ring 50.

The second nozzle 32b is formed inside the first sealing ring 50. The second nozzle 32b includes an injection opening 32d which communicates with the lubricant-oil channel of the first nozzle 32a and which has an opening in the vicinity of the sliding-contact section G at which the first sealing ring 50 slidably contacts the liner 11 to inject the lubricant oil to the sliding-contact section G.

With the first nozzle 32a and the second nozzle 32b, the function as the nozzle 32 which injects the lubricant oil to the sliding-contact section G at which the first sealing ring 50 slidably contacts the liner 11 is achieved.

The nozzle 32 constituted by the first nozzle 32a and the second nozzle 32b is disposed on each of a plurality of locations along the outer circumferential surface of the liner 11 in an annular fashion.

With the above configuration, the lubricant oil is injected precisely to the sliding-contact section G of the first sealing ring 50 via the second nozzle 32b formed inside the first sealing ring 50 from the first nozzle 32a.

Further, since the lubricant oil flows through the inside of the first sealing ring 50, it is possible to cool the inside, which is likely to accumulate heat, easily. Thus, it is possible to cool the first sealing ring 50 even more effectively and to prevent thermal hardening and abrasion of the first sealing ring 50 effectively.

### (Third embodiment)

The present embodiment is similar to the first embodiment except for the arrangement structure of the nozzle. Thus, only a nozzle forming part will be described.

Further, the same component is indicated by the same reference numeral and not described in detail.

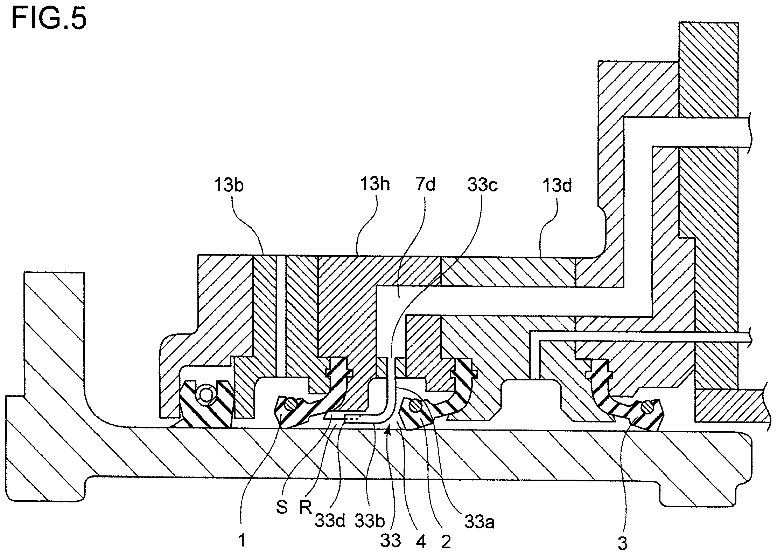

As illustrated in FIG. 5, in the present embodiment, the third housing 13h includes a nozzle 33 fixed to an end portion at the downstream side of the fourth oil channel 7d.

The nozzle 33 is constituted by a radially-extending portion33a and an axially extending portion 33b. The radially-extending portion 33a has an inlet 33c for the lubricant oil disposed as an opening at an end portion at the downstream side of the fourth oil channel 7d, and extends toward the center in the radial direction inside the first stern annular space 4. The axially-extending portion 33b bends at the clearance section R between the third housing 13h and the liner 11 toward the first sealing ring 1, and has an injection opening 33d for discharging the lubricant oil disposed as an opening in the vicinity of the sliding-contact section G at which the first sealing ring 1 slidably contacts the liner 11.

Further, a cutout S is disposed in the axial direction on a surface of the third housing 13h which faces the liner 11. The axially-extending portion 33b of the nozzle 33 is fitted into the cutout S.

The cutout S is formed so as to have a semi-circular cross section in a direction orthogonal to the axial direction.

With the above structure, the lubricant oil flows through the radially-extending portion 33a and the axially-extending portion 33b of the nozzle 33 from the end portion at the downstream side of the fourth oil channel 7d to be injected to the vicinity of the sliding-contact section G at which the first sealing ring 1 slidably contacts the liner 11 from the injection opening 33d. Thus, it is possible to cool the first sealing ring 1 even more effectively, and to prevent thermal hardening and abrasion of the first sealing ring 1 effectively.

### (Fourth embodiment)

The present embodiment is similar to the third embodiment except for that a space section V between the liner 11 and the propeller shaft 10 is utilized to return the lubricant oil having cooled the sliding-contact section G to the stern annular space.

Thus, only returning the lubricant oil having cooled the sliding-contact section G to the stern annular space will be described.

Further, the same component is indicated by the same reference numeral and not described in detail.

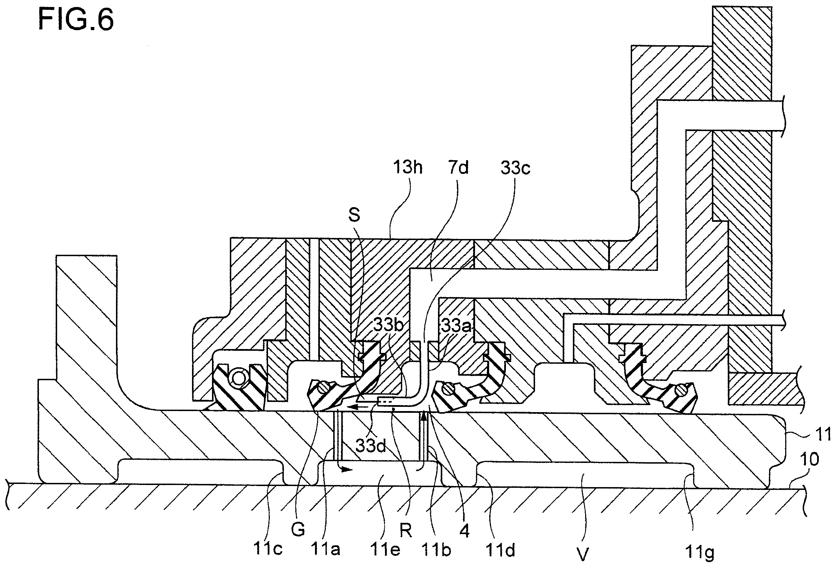

As illustrated in FIG. 6, in the present embodiment, the nozzle 33 is constituted by the radially-extending portion 33a and the axially extending portion 33b. The radially-extending portion 33a has an inlet 33c of the lubricant oil disposed as an opening on an end portion at the downstream side of the fourth oil channel 7d, and extends toward the center in the radial direction in the first stern annular space 4, which is a stern annular space. The axially-extending portion 33b bends at the clearance section R between the third housing 13h and the liner 11 toward the first sealing ring 1, and has an injection opening 33d for discharging the lubricant oil disposed as an opening in the vicinity of the sliding-contact section G of the first sealing ring 1 slidably contacting the liner 11.

The liner 11 is fitted onto the propeller shaft 10 from outside to be fixed to the propeller shaft 10.

At the opposite end portions, in the axial direction, of the inner circumferential surface of the liner 11, the inner circumferential surfaces of a stern-side protruding portion 11c and a bow-side protruding portion 11g having an annular shape and protruding toward the propeller shaft 10 are fitted with the outer circumferential surface of the propeller shaft 10.

The space section V between the stern-side protruding portion 11f and the bow-side protruding portion 11g of the liner 11 is an annular space tightly closed by the outer circumferential surface of the propeller shaft 10.

The first return oil channel 11a communicating with the space section V in the radial direction of the liner 11 is disposed at an intermediate position of the first sealing ring 1 of the liner 11 and the injection opening 33d of the nozzle 33. The second return oil channel 11b communicating with the space section V in the radial direction of the liner 11 is disposed on the liner 11 at a position facing the first stern annular space 4 (a vow-side position of the nozzle 33). The first annular protrusion 11c is disposed at a stern-side position of the first return oil channel 11a, protruding from the liner 11 toward the propeller shaft 10 and being fitted onto the outer circumferential surface of the propeller shaft 10. The second annular protrusion 11d is disposed at a bow-side position of the second return oil channel 11b, protruding from the liner 11 toward the propeller shaft 10 and being fitted onto the outer circumferential surface of the propeller shaft 10.

The third oil channel 11e is formed at a part of the space section V as an annular return oil channel formed by the first annular protrusion 11c and the second annular protrusion 11d.

A plurality of the first return oil channels 11a and the second return oil channels 11b are disposed at intervals in the circumferential direction of the liner 11.

Accordingly, the lubricant oil having cooled the sliding-contact section G passes through the third return oil channel 11e between the liner 11 and the propeller shaft 10 from the plurality of first return oil channels 11a, and flows to the vicinity of the bow-side position of the nozzle 33 inside the first stern annular space 4 from the plurality of second return oil channels 11d.

With the above structure, it is possible to prevent the pressure of the lubricant oil between the injection opening 33d and the sliding-contact section G from becoming too high to make it easier to secure the amount of injection of the lubricant oil from the injection opening 33d, as well as to cool the heat inside the liner 11 (generated from the sliding-contact section) with the lubricant oil passing through the first return oil channel 11a.

### Industrial Applicability

The present invention can be suitably applied to a stern tube sealing device in which a sealing ring is used to prevent ingress of seawater into a ship, the sealing ring being disposed between a propeller shaft penetrating through a liner member disposed on an outboard side of a stern tube and the liner member.

### Description of Reference Numerals

- 1, 50: First sealing ring
- 2: Second sealing ring
- 3: Third sealing ring
- 4: First stern annular space
- 5: Second stern annular space
- 6: Oil-reservoir tank
- 7: Oil feed pipe
- 7a: First oil channel
- 7b: Second oil channel
- 7c: Third oil channel
- 7d: Fourth oil channel
- 10: Propeller shaft
- 11: Liner
- 11a: First return oil channel
- 11b: Second return oil channel
- 11e: Third oil channel
- 12: Stern tube sealing device
- 13: Housing
- 13a: First housing
- 13b: Second housing
- 13c, 13g, 13h: Third housing
- 13d: Fourth housing
- 13e: Fifth housing
- 15: Stern tube
- 18: Fourth sealing ring
- 31, 32, 33: Nozzle
- G: Sliding-contact section
- R: Clearance section
- S: Cutout
- V: Space section

## Claims

1. A stern tube sealing device (12) including a plurality of sealing rings (1,2,3;50) surrounding and contacting an outer circumferential surface of a liner (11) of a propeller shaft (10) which, in use, rotatably supports a propeller (21) mounted to a stern of a ship, comprising:
a housing (13) fitted onto the liner (11), the housing (13) holding the plurality of sealing rings (1,2,3;50);
a first sealing ring (1;50) disposed closest to the stern among the plurality of sealing rings (1,2,3;50);
a second sealing ring (2) disposed on a ship front side of the first sealing ring (1;50) at a distance from the first sealing ring (1;50);
a nozzle (31;32;33) configured to inject lubricant oil for cooling the first sealing ring (1;50); and
an oil-reservoir tank (6) for storing the lubricant-oil,
wherein an injection opening (31d;32d;33d) of the nozzle (31;32;33) for injecting the lubricant oil is disposed in a vicinity of a sliding-contact section (G) at which the first sealing ring (1;50) slidably contacts the liner (11), and
**characterised in that**
a spiral groove (31f) is disposed on a surface of the housing (13) which faces the liner (11) and in a vicinity of the injection opening (31d), in such a direction that the lubricant oil is forced out toward a stern annular space (4) formed by the first sealing ring (1; 50) and the second sealing ring (2) together, in accordance with normal rotation of the liner (11).

2. The stern tube sealing device (12) according to claim 1,
wherein the arrangement is such that the lubricant oil having cooled the sliding-contact section (G) circulates within the stern annular space (4) and passes through oil channels (7) and a lubricant-oil cooling device to be returned to the oil-reservoir tank (6).

3. The stern tube sealing device (12) according to claim 1 or 2,
wherein the nozzle (31) is formed on the housing (13).

4. The stern tube sealing device (12) according to any one of claims 1 to 3,
wherein the nozzle (32) is disposed inside the first sealing ring (50).

5. The stern tube sealing device (12) according to claim 1 or 2, wherein the nozzle (33) includes:
a radially-extending portion (33a), and
an axially extending portion (33b),
wherein the radially-extending portion (33a) has an inlet (33c) for the lubricant oil disposed as an opening at an end portion at a downstream side of an oil channel (7d), and extends toward a center in a radial direction inside the stern annular space (4), and
wherein the axially-extending portion (33b) bends at a clearance section (R) between the housing (13) and the liner (11) toward the first sealing ring (1), and has the injection opening (33d) for discharging the lubricant oil disposed as an opening in the vicinity of the sliding-contact section (G) .

6. The stern tube sealing device (12) according to any one of claims 1 to 5, further comprising:
a space section (V) formed by the propeller shaft (!0) and the liner (11) fitted onto the propeller shaft (10);
a first return oil channel (11a) disposed between the first sealing ring (1) and the injection opening (33d) so as to communicate with the space section (V) in a radial direction of the liner (11); and
a second return oil channel (11b) disposed on a portion of the liner (11) which faces the stern annular space (4) so as to bring the space section (V) and the stern annular space (4) into communication in the radial direction of the liner (11),
wherein the lubricant oil having cooled the sliding-contact section (G) returns to the stern annular space (4) via the space section (V).

7. The stern tube sealing device (12) according to any one of claims 1 to 5,
wherein the introduction inlet (33c) for the lubricant oil to be injected from the injection opening (33d) has an opening oriented orthogonally to a flow direction of the lubricant oil in the lubricant oil channel inside the housing (13) .

## Patentansprüche

1. Eine Stevenrohr-Dichtungsvorrichtung (12) mit einer Vielzahl von Dichtungsringen (1,2,3;50), die eine Außenumfangsoberfläche einer Ummantelung (11) einer Propellerwelle (10) umgeben und berühren, die, im Einsatz, einen Propeller (21), der an einem Heck eines Schiffs angebracht ist, drehbar trägt, mit:
einem Gehäuse (13), das auf die Ummantelung (11) aufgesetzt ist, wobei das Gehäuse (13) die Vielzahl von Dichtungsringen (1,2,3;50) hält,
einem ersten Dichtungsring (1;50), der am nächsten zu dem Heck von der Vielzahl von Dichtungsringen (1,2,3;50) angeordnet ist,
einem zweiten Dichtungsring (2), der an einer Schiffvorderseite des ersten Dichtungsrings (1;50) in einer Distanz von dem ersten Dichtungsring (1;50) angeordnet ist,
einer Düse (31;32;33), die konfiguriert ist, um Schmieröl zum Kühlen des ersten Dichtungsrings (1;50) einzuspritzen, und
einem Ölspeichertank (6) zum Speichern des Schmieröls,
wobei eine Einspritzöffnung (31d;32d;33d) der Düse (31;32;33) zum Einspritzen des Schmieröls in einer Umgebung eines Gleitkontaktabschnitts (G) angeordnet ist, an dem der erste Dichtungsring (1;50) die Ummantelung (11) gleitend kontaktiert, angeordnet ist, und
**dadurch gekennzeichnet, dass**
eine Spiralnut (31f) an einer Oberfläche des Gehäuses (13), welche der Ummantelung (11) zugewandt ist, und in einer Umgebung der Einspritzöffnung (31d) in einer solchen Richtung angeordnet ist, dass das Schmieröl zu einem Heck-Ringraum (4), der durch den ersten Dichtungsring (1;50) und den zweiten Dichtungsring (2) zusammen gebildet ist, herausgedrückt wird, gemäß einer normalen Rotation der Ummantelung (11).

2. Die Stevenrohr-Dichtungsvorrichtung (12) gemäß Anspruch 1,
wobei die Anordnung so ist, dass das Schmieröl, das den Gleitkontaktabschnitt (G) gekühlt hat, innerhalb des Heck-Ringraums (4) zirkuliert und durch Ölkanäle (7) und eine Schmieröl-Kühlvorrichtung passiert, um zu dem Ölspeichertank (6) zurückgeführt zu werden.

3. Die Stevenrohr-Dichtungsvorrichtung (12) gemäß Anspruch 1 oder 2,
wobei die Düse (31) an dem Gehäuse (13) ausgebildet ist.

4. Die Stevenrohr-Dichtungsvorrichtung (12) gemäß einem der Ansprüche 1 bis 3,
wobei die Düse (32) im Inneren des ersten Dichtungsrings (50) angeordnet ist.

5. Die Stevenrohr-Dichtungsvorrichtung (12) gemäß Anspruch 1 oder 2, wobei die Düse (33) aufweist:
einen sich radial erstreckenden Abschnitt (33a), und
einen sich axial erstreckenden Abschnitt (33b),
wobei der sich radial erstreckende Abschnitt (33a) einen Einlass (33c) für das Schmieröl besitzt, der als eine Öffnung an einem Endabschnitt an einer stromabwärtigen Seite eines Ölkanals (7d) angeordnet ist und sich zu einer Mitte in einer Radialdichtung im Inneren des Heck-Ringraums (4) erstreckt, und
wobei der sich axial erstreckende Abschnitt (33b) an einem Freiraumabschnitt (R) zwischen dem Gehäuse (13) und der Ummantelung (11) zu dem ersten Dichtungsring (1) hin abbiegt und die Einspritzöffnung (33d) zum Austragen des Schmieröls als eine Öffnung in der Umgebung des Gleitkontaktabschnitts (G) angeordnet hat.

6. Die Stevenrohr-Dichtungsvorrichtung (12) gemäß einem der Ansprüche 1 bis 5, ferner mit:
einem Raumabschnitt (V), der durch die Propellerwelle (10) und die Ummantelung (11), die auf die Propellerwelle (10) aufgesetzt ist, gebildet ist,
einem ersten Rückführölkanal (11a), der zwischen dem ersten Dichtungsring (1) und der Einspritzöffnung (33d) so angeordnet ist, dass er mit dem Raumabschnitt (V) in einer Radialrichtung der Ummantelung (11) kommuniziert, und
einem zweiten Rückführölkanal (11b), der so an einem Abschnitt der Ummantelung (11) angeordnet ist, der dem Heck-Ringraum (4) zugewandt ist, dass der den Raumabschnitt (V) und den Heck-Ringraum (4) in Verbindung in der Radialrichtung der Ummantelung (11) bringt,
wobei das Schmieröl, das den Gleitkontaktabschnitt (G) gekühlt hat, zu dem Heck-Ringraum (4) über den Raumabschnitt (V) zurückkehrt.

7. Die Stevenrohr-Dichtungsvorrichtung (12) gemäß einem der Ansprüche 1 bis 5,
wobei der Einführeinlass (33c) für das Schmieröl, das von der Einspritzöffnung (33d) einzuspritzen ist, eine Öffnung besitzt, die orthogonal zu einer Strömungsrichtung des Schmieröls in dem Schmierölkanal im Inneren des Gehäuses (13) orientiert ist.

## Revendications

1. Dispositif (12) de joint d'écubier d'embossage, comprenant une pluralité de bagues (1, 2, 3 ; 50) d'étanchéité, entourant et contactant une surface circonférentielle extérieure d'un fourreau (11) d'un arbre (10) d'hélice, qui, en utilisation, supporte à rotation une hélice (21) montée à la poupe d'un bateau, comprenant :
une enveloppe (13), adaptée sur le fourreau (11), l'enveloppe (13) maintenant la pluralité de bagues (1, 2, 3 ; 50) d'étanchéité ;
une première bague (1 ; 50) d'étanchéité, disposée le plus près de la poupe parmi la pluralité de bagues (1, 2, 3 ; 50) d'étanchéité ;
une deuxième bague (2) d'étanchéité, disposée d'un côté avant du bateau de la première bague (1 ; 50) d'étanchéité, à distance de la première bague (1 ; 50) d'étanchéité ;
une buse (31 ; 32 ; 33), configurée pour injecter de l'huile lubrifiante, afin de refroidir la première bague (1 ; 50) d'étanchéité et
un réservoir (6) d'huile, pour stocker l'huile lubrifiante,
dans lequel une ouverture (31d, ; 32d ; 33d) d'injection de la buse (31 ; 32 ; 33), pour injecter l'huile lubrifiante, est disposée à proximité d'une partie (G) en contact glissant où la première bague (1 ; 50) d'étanchéité est en contact glissant avec le fourreau (11) et
**caractérisé en ce que**
une rainure (31f) en spirale est disposée à la surface de l'enveloppe (13), qui fait face au fourreau (11) et à proximité de l'ouverture (31d) d'injection, dans une direction telle que l'huile lubrifiante soit forcée de sortir vers un espace (4) annulaire de poupe, formé par la première bague (1 ; 50) d'étanchéité et la deuxième bague (2) d'étanchéité ensemble, en accord avec la rotation normale du fourreau (11).

2. Dispositif (12) de joint d'écubier d'embossage suivant la revendication 1,
dans lequel l'agencement est tel que l'huile lubrifiante, ayant refroidi la partie (G) en contact glissant, circule dans l'espace (4) annulaire de proue et passe dans des canaux (7) pour de l'huile et dans un dispositif de refroidissement d'huile lubrifiante, pour être retournée au réservoir (6) d'huile.

3. Dispositif (12) de joint d'écubier d'embossage suivant la revendication 1 ou 2,
dans lequel la buse (31) est formée sur l'enveloppe (13).

4. Dispositif (12) de joint d'écubier d'embossage suivant l'une quelconque des revendications 1 à 3,
dans lequel la buse (32) est disposée à l'intérieur de la première bague (50) d'étanchéité.

5. Dispositif (12) de joint d'écubier d'embossage suivant la revendication 1 ou 2, dans lequel la buse (33) comprend :
une partie (33a) s'étendant radialement et
une partie (33b) s'étendant axialement,
dans lequel la partie (33a) s'étendant radialement a une entrée (33c), pour l'huile lubrifiante, disposée sous la forme d'une ouverture à une partie d'extrémité à un côté en aval d'un canal (7d) pour de l'huile, et s'étend vers un centre dans une direction radiale, à l'intérieur de l'espace (4) annulaire de poupe et
dans lequel la partie (33b) s'étendant axialement se courbe à une partie (R) de jeu, entre l'enveloppe (13) et le fourreau (11), vers la première bague (1) d'étanchéité et a l'ouverture (33d) d'injection, pour refouler l'huile lubrifiante, disposée sous la forme d'une ouverture à proximité de la partie (G) de contact glissant.

6. Dispositif (12) de joint d'écubier d'embossage suivant l'une quelconque des revendications 1 à 5, comprenant, en outre :
une partie (V) formant un espace, formée par l'arbre (10) de l'hélice, et le fourreau (11), adapté sur l'arbre (10) de l'hélice ;
un premier canal (11a) de retour de l'huile, disposé entre le premier air bag (1) d'étanchéité et l'ouverture (33d) d'injection, de manière à communiquer avec la partie (V) formant un espace, dans une direction radiale du fourreau (11) et
un deuxième canal (11b) de retour d'huile, disposé sur une partie du fourreau (11), qui fait face à l'espace (4) annulaire de poupe, de manière à mettre la partie (V) d'espace et l'espace (4) annulaire de proue en communication dans la direction radiale du fourreau (11),
dans lequel l'huile lubrifiante, ayant refroidi la partie (G) de contact glissant, retourne à l'espace (4) annulaire de poupe, par l'intermédiaire de la partie (V) formant un espace.

7. Dispositif (12) de joint d'écubier d'embossage suivant l'une quelconque des revendications 1 à 5,
dans lequel l'entrée (33c) d'introduction de l'huile lubrifiante, à injecter par l'ouverture (33d) d'injection, a une ouverture orientée orthogonalement à une direction d'écoulement de l'huile lubrifiante dans le canal pour de l'huile lubrifiante à l'intérieur de l'enveloppe (13).
